(19) Europäisches Patentamt / European Patent Office / Office européen des brevets

(11) **EP 2 653 779 A2**

(12) **EUROPEAN PATENT APPLICATION**

(43) Date of publication:
**23.10.2013 Bulletin 2013/43**

(51) Int Cl.:
**F21V 8/00** $^{(2006.01)}$     **G02B 6/00** $^{(2006.01)}$

(21) Application number: **12198955.2**

(22) Date of filing: **21.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.04.2012 TW 101114135**

(71) Applicant: **Lextar Electronics Corp.**
**300 Hsinchu (TW)**

(72) Inventors:
- **Lin, Yu-Min**
  **New Taipei City 220 (TW)**
- **Cheng, Chia-Shen**
  **Taichung City 401 (TW)**
- **Liao, Cheng-Chun**
  **Hsinchu City 300 (TW)**
- **Chen, Ya-Wen**
  **Yilan City, Yilan County 260 (TW)**

(74) Representative: **Viering, Jentschura & Partner**
**Kennedydamm 55 / Roßstrasse**
**40476 Düsseldorf (DE)**

(54) **Light module and light guide device thereof**

(57) A light guide device (110) includes N+1 light guide plates (114a) and N linear plane splitters (112a). The light guide plates (114a) include a light outlet face (114d), a light guiding face (114e) and a reflection face (114f). The volume of the light guide device (110) is defined by the light outlet face (114d) opposite to the light guiding face (114e). The light guiding face (114e) has a plurality of first microstructures (114g) for diverting the light. The reflection face (114f) extends from the light outlet face (114d) toward a splitting portion (S 1). The linear plane splitters (112a) have a first and a second splitting portion (S1, S2). The first and second splitting portions (S1, S2) of the i$^{th}$ linear plane splitter (112a) connects the light guiding face (114e) and the reflection face (114f) of the (j-1)$^{th}$ and j$^{th}$ light guide plates (114a). The i and j satisfy $1 \leqq i \leqq N$ and $2 \leqq j \leqq N+1$. Moreover, a light module (100) utilizing the light guide device (110) is disclosed.

FIG. 1A

**Description**

BACKGROUND

1. Field of the Invention

The instant disclosure relates to an illumination device and the optical members thereof; in particular, to a light module and the light guide device thereof.

2. Description of Related Art

A conventional illumination unit, especially the high brightness Light-emitting diode (LED), usually has high directivity and emits collimated light ray concentrating at one spot. Thus, the illumination unit may cause the uneven light beam distribution and dazzling to users.

Typically, diffusers are used to provide uniform light intensity of high brightness lights or displays, for example, liquid crystal displays (LCDs) so the users observe homogeneous light.

SUMMARY OF THE INVENTION

The instant disclosure provides a light guide device which is capable of making the light ray uniform.

The light guide device includes N+1 light guide plates and N linear plane splitters, where the N is a natural number. Each of the light guide plates includes a light outlet face, a light guiding face and a reflection face. The light guide device has two faces where the light outlet face opposes the light guiding face. The light guiding face is formed with a plurality of first microstructures to direct light rays. The reflection face extends from an edge of the light outlet face to a distance with a special angle of elevation and is adjacent to the edge. Each of the linear plane splitters includes a light inlet face, a first splitting portion, and a second splitting portion. The first and second splitting portions extend from the light inlet face. Additionally, the $(j-1)^{th}$ and the $j^{th}$ light guide plates are connected by the first and second splitting portions of the $i^{th}$ linear plane splitter respectively via the reflection face and the light guiding face. The first and second splitting portions project outward from the planes of the $(j-1)^{th}$ and $j^{th}$ light guide plates, and the $i^{th}$ and $j^{th}$ satisfy $1 \leqq i \leqq N$ and $2 \leqq j \leqq N+1$.

The instant disclosure also provides a light module, which includes the aforementioned light guide device and N light sources. The light sources are disposed on the light inlet face of each of the splitters so the light ray from the $i^{th}$ light source travels through the $i^{th}$ splitter to the $(j-1)^{th}$ and $i^{th}$ light guide plates separately.

The instant disclosure also provides a light guide device, which includes a rounded light guide plate and a flat-top cone splitter. Each of the rounded light guide plates includes a light outlet face, a light guiding face and a reflection face. The rounded light guide plate is configured with the light outlet face opposite to the light guiding face. (The light outlet face is located on one side of the rounded light guide. The light guiding face is located on the other side of the rounded light guide.) The light guiding face is formed with a plurality of first microstructures to direct light rays. The reflection face extends from an edge of the light outlet face to a distance with a special angle of elevation and is adjacent to the edge. The flat-top cone splitter consists of a circular or an annular light inlet face and a splitting portion surrounding the light inlet face. The bottom of the splitting portion connects to the light guiding face and the reflection face respectively.

The instant disclosure also provides a light module, which includes the aforementioned light guide device and at least one light source. The light source is disposed on the light inlet face so the light ray from the light source travels through the splitter to the rounded light guide plate.

Based on the above, the light ray propagates through the splitter, reflection face and the microstructures of the light guiding face. Then, the light guide device of the invention is capable of making the light ray uniform.

In order to further understand the instant disclosure, the following embodiments are provided along with illustrations to facilitate the appreciation of the instant disclosure; however, the appended drawings are merely provided for reference and illustration, without any intention to be used for limiting the scope of the instant disclosure.

BRIEF DESCRIPTION OF THE DRAWINGS

Fig. 1A illustrates a perspective view of a light module in accordance with an embodiment of the instant disclosure.

Fig. 1B illustrates a perspective view of a light guide device in Fig. 1A.

Fig. 1C illustrates a side view of one splitter in Fig. 1A.

Fig. 1D illustrates a side view of one splitter connecting to the light guide plates in Fig. 1A.

Fig. 2 illustrates a side view of a light module in accordance with another embodiment of the instant disclosure.

Fig. 3A illustrates a perspective view of a light module in accordance with another embodiment of the instant disclosure.

Fig. 3B illustrates a cross-sectional view of a light guide device in Fig. 3A.

Fig. 4A illustrates a perspective view of a light module in accordance with another embodiment of the instant disclosure.

Fig. 4B illustrates a cross-sectional view of a light guide device in Fig. 4A.

Figs. 5-9 illustrate cross-sectional views of first and third microstructures in accordance with other embodiments of the instant disclosure.

## DETAILED DESCRIPTION OF THE PREFERRED EMBODIMENTS

The aforementioned illustrations and following detailed descriptions are exemplary for the purpose of further explaining the scope of the instant disclosure. Other objectives and advantages related to the instant disclosure will be illustrated in the subsequent descriptions and appended drawings.

The light module according to the instant disclosure can be applied to a lamp or a display unit and provide uniform light rays. Specifically, the light module can be made into a ceiling lamp, a desk lamp, a decorative lamp or a alarm signal. In addition, the light module can serve as a backlight module in an LCD display unit.

In an embodiment of the instant disclosure, the light module includes N light sources and a light guide device. The light guide device includes N linear plane splitters and N+1 light guide plates, where N is a natural number representing quantity. That is to say, the light guide device includes at least one light source and at least two light guide plates. In other words, the quantities of the light source and linear plane splitter are equal, whereas the number of the light guide plates is one more than that of the light sources. Consequently, the number of the light guide plates is one more than that of the linear plane splitters.

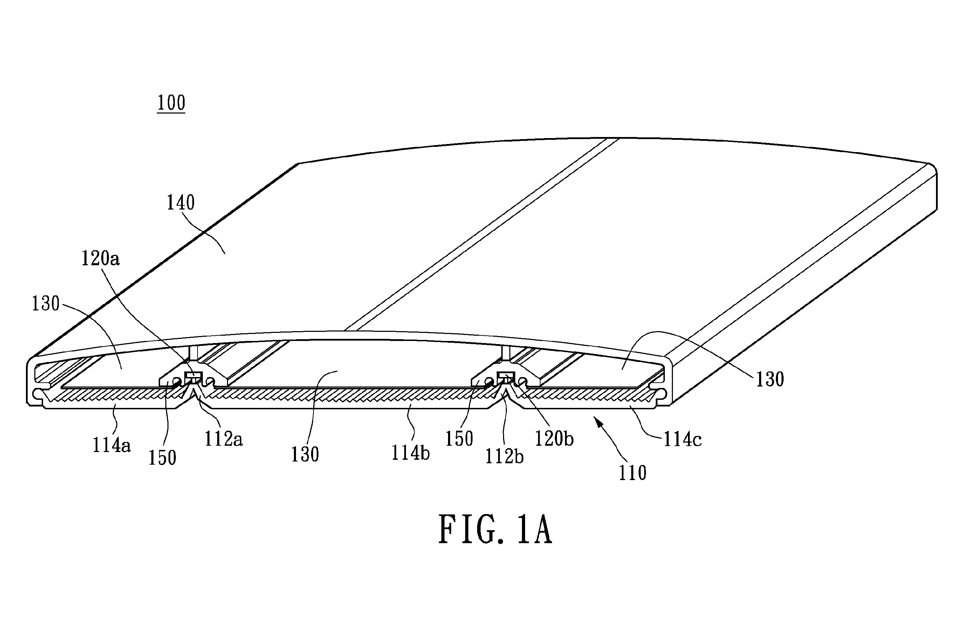

For example, please refer to Fig. 1A showing a perspective view of the light module in accordance with an embodiment of the instant disclosure. The light module 100 includes a light guide device 110 and two light sources 120a, 120b. The light guide device 110 includes two linear plane splitter 112a, 112b and three light guide plates 114a, 114b, 114c. The light sources 120a and 120b may be the same type of components. For example, the light sources 120a and 120b may be a plurality of light emitting diodes or the like serving as illumination. The light sources 120a and 120b may also be light bars. However, the illumination units of light sources 120a, 120b can vary according to desired intention.

Furthermore, the light module 100 may further include a plurality of reflection plates 130, a housing 140 and a plurality of bases 150. The reflection plates 130, the bases 150, the light sources 120a, 120b and the light guide device 110 are disposed in the housing 140. The light sources 120a, 120b are mounted in the bases 150. The reflection plates 130 are disposed above the light guide plates 114a, 114b and 114c for reflecting the light rays from the light guide plates 114a, 114b and 114c. Moreover, the reflection plates 130 are located between the light guide plates 114a, 114b, 114c, and the bases 150.

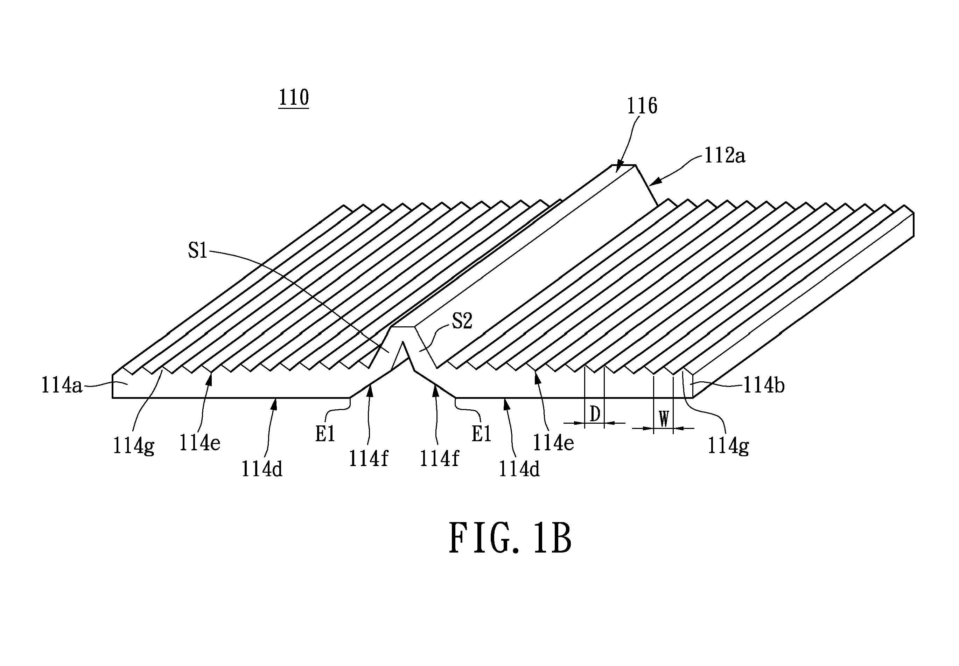

Fig. 1B illustrates a perspective view of a light guide device in Fig. 1A. Please referring to Fig. 1A and 1B, in the light guide device 110, the linear plane splitters 112a, 112b are made of the same material and have the same structure. Hence, the light guide plates 114a, 114b and 114c have the same refractive index, which ranges from 1.5 to 1.58. The linear plane splitters 112a, 112b are visibly transparent, and the light guide plates 114a, 114b and 114c are transparent board. The linear plane splitters 112a, 112b and the light guide plates 114a, 114b, 114c can be made of polymethylmethacrylate (PMMA, aka. Acrylic), glass or other transparent material.

Each of the light guide plates (i.e. the light guide plates 114a, 114b or 114c) includes a light outlet face 114d, a light guiding face 114e and a reflection face 114f. The light outlet face 114d, being smooth or matted, and the light guiding face 114e are arranged opposite each other.

The reflection face 114f connects to an edge E1 of the light outlet face 114d and extends from the edge E1 of the light outlet face 114d to a distance with a special angle of elevation. The edge E1 is substantially a straight line, and the reflection face 114f does not connect to the light guiding face 114e. Moreover, the reflection face 114f can be a plane and made of a highly reflective material, or the reflection face 114f is formed with a plurality of second microstructures or paints with high reflectivity. Thus, the reflection face 114f can reflect the light rays.

The light guiding face 114e has a plurality of first microstructures 114g which are spaced prisms. In the preferred embodiment, the width W of one first microstructure 114g (i.e. the bottom width thereof) may range from $5\mu$ m to 500 $\mu$m, whereas the distance D between each of the neighboring first microstructures 114g is less than 0.5 mm. In the instant embodiment, the width W and distance D are preferred examples and the lengths thereof are not limited thereto.

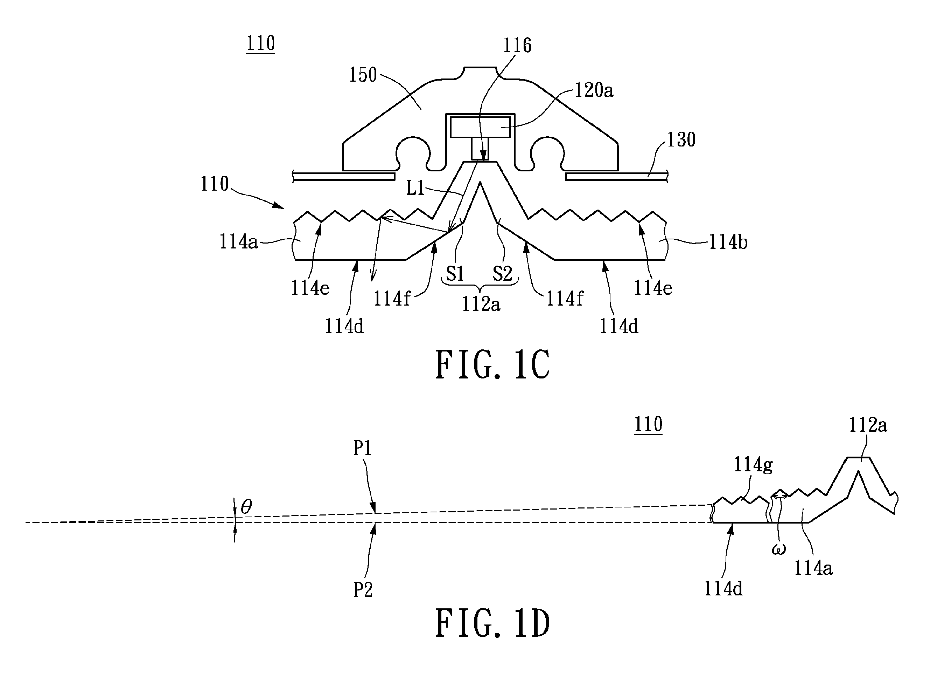

Fig. 1C illustrates a side view of one splitter in Fig. 1A. The linear plane splitters 112a and 112b are substantially the same in configuration, and the light sources 120a, 120b may be the same type of components. Hence, Fig. 1C only shows the linear plane splitter 112a and the light source 120a in order to make the detail of the linear plane splitter 112a or 112b clear in Fig. 1C.

Please refer to Figs. 1A to 1C. Each linear plane splitter 112a or 112b has a light inlet face 116, a first splitting portion S1 and a second splitting portion S2. Each linear plane splitter 112a or 112b is disposed in between two of the adjacent light guide plates 114a, 114b and 114c and connects the light guide plates by the first and second splitting portions S1 and S2 which both extend from the light inlet face 116 and stretch toward the light guiding face 114e and reflection face 114f.

In the instant embodiment, the light guide device 110 includes two linear plane splitters 112a, 112b and three light guide plates 114a, 114b and 114c. The first splitting portion S1 of the 1st linear plane splitter 112a connects to the adjacent light guiding face 114e and the reflection face 114f of the 1st light guide plate 114a. The second splitting portion S2 of the 1st linear plane splitter 112a connects to the adjacent light guiding face 114e and the reflection face 114f of the 2nd light guide plate 114b. Furthermore, the first and second splitting portions S1, S2 of the 1st linear plane splitter 112a project outward, away from the plane of 1st light guide plate 114a and 2nd light guide plate 114b.

Similarly, the first splitting portion S1 of the 2nd linear plane splitter 112b optically couples with the light guiding face 114e and the reflection face 114f of the light guide plate 114b. The second splitting portion S2 of the 2nd linear plane splitter 112b optically couples with the light guiding face 114e and the reflection face 114f of the light guide plate 114c. The first and second splitting portions S1, S2 of the 2nd linear plane splitter 112b also project outward, away from the plane of light guide plates 114b and 114c.

In general, when the light guide device 110 includes N linear plane splitters and N+1 light guide plates, the first splitting portion S1 of the $i^{th}$ linear plane splitter optically couples with the light guiding face 114e and reflection face 114f of the $(j-1)^{th}$ light guide plate. On the other hand, the second splitting portion S2 of the $i^{th}$ linear plane splitter optically couples with the light guiding face 114e and the reflection face 114f of the $j^{th}$ light guide plate. The $i^{th}$ and $j^{th}$ have to satisfy that $1 \leqq i \leqq N$ and $2 \leqq j \leqq N+1$.

Please refer to Fig. 1C. When the light source 120a emits light ray L1, the light ray L1 firstly passes through the light inlet face 116 and arrives the reflection face 114f of the light guide plate 114a. Then the reflection face 114f directs the light ray L1 to the first microstructures 114g of the light guiding face 114e. The light ray L1 is diverted toward the light outlet face 114d and emitted there-from.

Identically, when the light source 120a emits light ray L1, the light ray L1 firstly passes through the light inlet face 116 and arrives the reflection face 114f of the light guide plate 114b. Then the reflection face 114f directs the light ray L1 to the first microstructures 114g of the light guiding face 114e. The light ray L1 is diverted toward the light outlet face 114d and emitted there- from.

In other words, the light ray L1 from the light source 120a travels though the linear plane splitter 112a to the 1st and 2nd light guide plates 114a and 114b separately. Thus, if the light module 100 includes N light sources and N linear plane splitters, the light ray from the $i^{th}$ light source travels though the $i^{th}$ linear plane splitter to the $(j-1)^{th}$ and $j^{th}$ light guide plates.

The light ray L1 enters from the light inlet face 116 firstly and is split by the linear plane splitter 112a to the light guide plates 114a and 114b separately. The light ray L1 further strikes the reflection face 114f, light guiding face 114e and light outlet face 114d of light guide plates 114a and 114b respectively, and therefore the light ray L1 is equally distributed.

Please refer to Fig. 1D which shows a side view of the linear plane splitter and the light guide plate connected to the linear plane splitter in Fig. 1A, in which Fig. 1D takes the linear plane splitter 112a and the light guide plate 114a for an example. The first microstructures 114g are on a reference plane P1 and an angle θ is formed by the intersection of the plane P1 and another plane P2 that extends from the light outlet face 114d. Each of the prisms (i.e. the first microstructures 114g) has an apex angle ω.

For optimizing the light ray uniform distribution of the light module 100, in the preferred embodiment, the angle θ may be less than 10°, whereas the apex angle ω may range from 60° to 120°. The θ, ω and n satisfy the equation (1):

$$3 \times \sin^{-1}(1/n) > (\theta + \omega) > 1.5 \times \sin^{-1}(1/n) \qquad (1)$$

The n is the refractive index of the light guide plate 114a which ranges from 1.5 to 1.58.

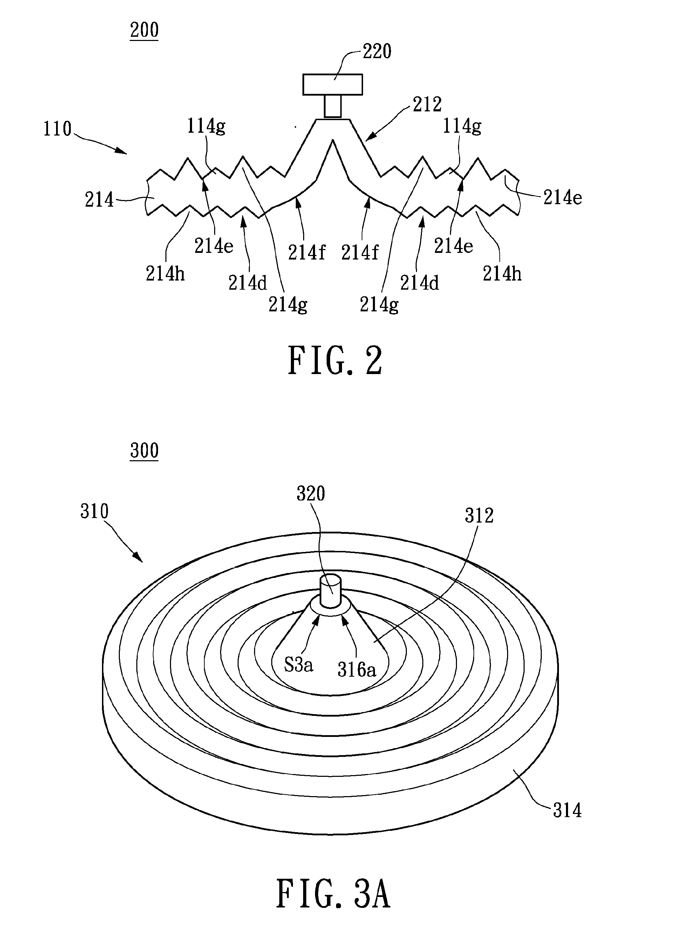

Please refer to Fig. 2 which is a side view of another embodiment of the light module. In the instant embodiment, a light module 200 includes a light guide device 210 and a light source 220. The light source 220 can be the same as the aforementioned light sources 120a, 120b. The light guide device 210 includes at least a linear plane splitter 212 and a plurality of light guide plates 214. The linear plane splitter 212 may be the aforementioned linear plane splitters 112a or 112b. The light guide device 210 is overall identical to the light guide device 110 yet differs in the light guide plate structure.

Each of the light guide plates 214 has a light outlet face 214d, a light guiding face 214e and a reflection face 214f. The arrangement of the light outlet face 214d, light guiding face 214e and reflection face 214f are identical to the aforementioned light outlet face 114d, light guiding face 114e and reflection face 114f.

However, the light guiding face 214e has a plurality of first microstructure 114g and a plurality of third microstructure 214g. Although the third microstructures 214g are spaced prisms, the detail structure of the third microstructures 214g are different from the first microstructures 114g. For example, in Fig. 2, the third microstructures 214g are taller than the first microstructures 114g.

In addition, the light outlet face 214d has a plurality of outlet microstructures 214h. The outlet microstructures 214h are spaced prisms or semicircle cylinders. Certainly, the surface of the light outlet face 214d can be a smooth plane or a matted surface. Furthermore, the reflection face 214f without connecting to the light guiding face 214e can be curved, for example, circular parabolic, elliptic parabolic or hyperbolic parabolic. Of course, the reflection face 214f can be flat as the light outlet face 114d.

In short, the light outlet face 214d can be formed with outlet microstructures 214h, or the light outlet face 214d can be a smooth plane or a matted surface. The reflection face 214f without connecting to the light guiding face 214e can be curved or flat. Fig. 2 shows a preferred embodiment and the structure of the light guide device is not limited thereto.

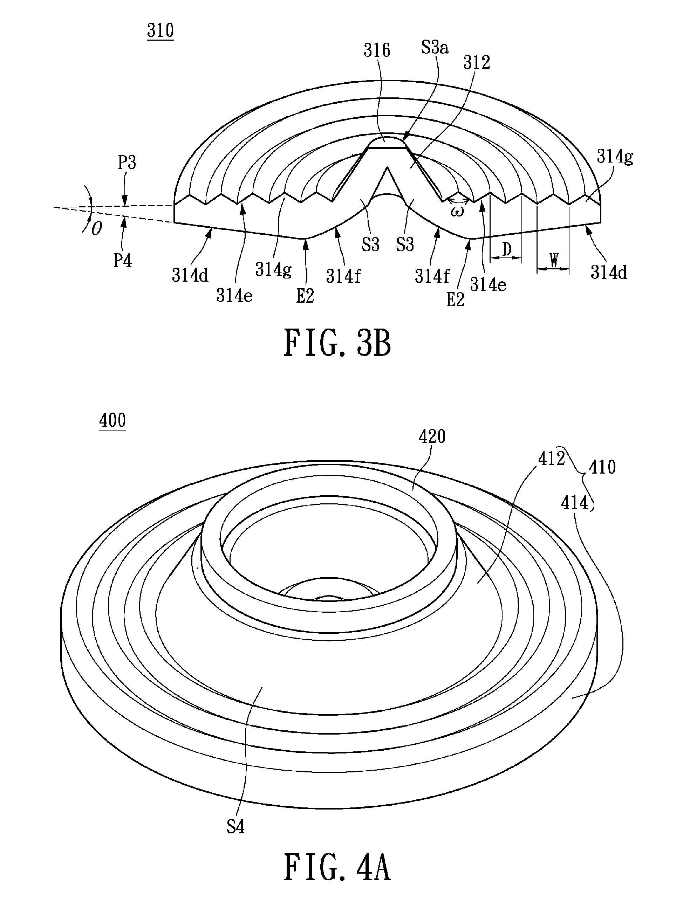

Fig. 3A illustrates a perspective view of a light module in accordance with another embodiment of the instant disclosure. Fig. 3B illustrates a cross-sectional view of a light guide device in Fig. 3A. Please refer to Fig. 3A in conjunction with Fig. 3B. A light module 300 includes a light guide device 310 and a light source 320. The light guide device 310 includes a rounded light guide plate 314 and a flat-top cone splitter 312. The light source 320 is disposed on the flat-top cone splitter 312.

The rounded light guide plate 314 includes a light outlet face 314d, a light guiding face 314e and a reflection face 314f. The rounded light guide plate 314 has the light guiding face 314e opposite to the light outlet face 314d. The reflection face 314f connects to an edge E2 of the light outlet face 314d and extends from the edge E2 of the light outlet face 314d to a distance with a special angle of elevation. In addition, the reflection face 314f is a curved surface (as shown in Fig. 3B) and does not connect to the light guiding face 314e.

The light guiding face 314e has a plurality of first microstructures 314g. The reflection face 314f is made of highly reflective material. Alternatively, the reflection face 314f is formed with a plurality of second microstructures or paints with high reflectivity. Each of the first microstructures 314g is an annular prism spaced by predetermined distance. The width W of the first microstructure 314g ranges between 5 $\mu$m to 500 $\mu$m. The distance D between two neighboring first microstructures 314g may be less than 0.5 mm. However, the width W and distance D are taken for examples and can vary according to desired intention. Accordingly, the embodiment of the instant disclosure does not limit the distance D.

The flat-top cone splitter 312 consists of a rounded light inlet face 316 on top and a splitting portion S3 surrounding the light inlet face 316. The top circumference S3a of the splitting portion S3 connects to the circumference 316a of the light inlet face 316 (as shown in Fig. 3A). Additionally, the bottom of the splitting portion S3 connects to the light guiding face 314e of the light guide plate 314 and the reflection face 314f. The cone splitter 312 projects outward, away from the plane of the rounded light guide plate 314.

The light source 320 is disposed on top of the light inlet face 316. When the light source 320 emits the light ray, the light ray enters the cone splitter 312 via the light inlet face 316 firstly. The light ray traveling in the cone splitter 312 is reflected by the reflection face 314f and then is directed to the light guide plate 314. Further, the light ray is diverted by the first microstructures 314g toward the light outlet face 314d. Thus, the light ray spreads from the light outlet face 314d to give the impression of uniform distribution.

Each of the first microstructures 314g is on a reference plane P3. The intersection of the reference plane P3 and a reference plane P4 extending from the light outlet face 314d forms an angle $\theta$. Each of the prisms (i.e. the first microstructure 314g) has an apex angle $\omega$. For optimizing the light uniform distribution, in the instant preferred embodiment, the angle $\theta$ may be less than 10° while the apex angle $\omega$ may range between 60° to 120°. The angle $\theta$, the apex angle $\omega$ and the refractive index n of the light guide plate 314 also satisfy the aforementioned equation (1). The refractive index n ranges from 1.5 to 1.58.

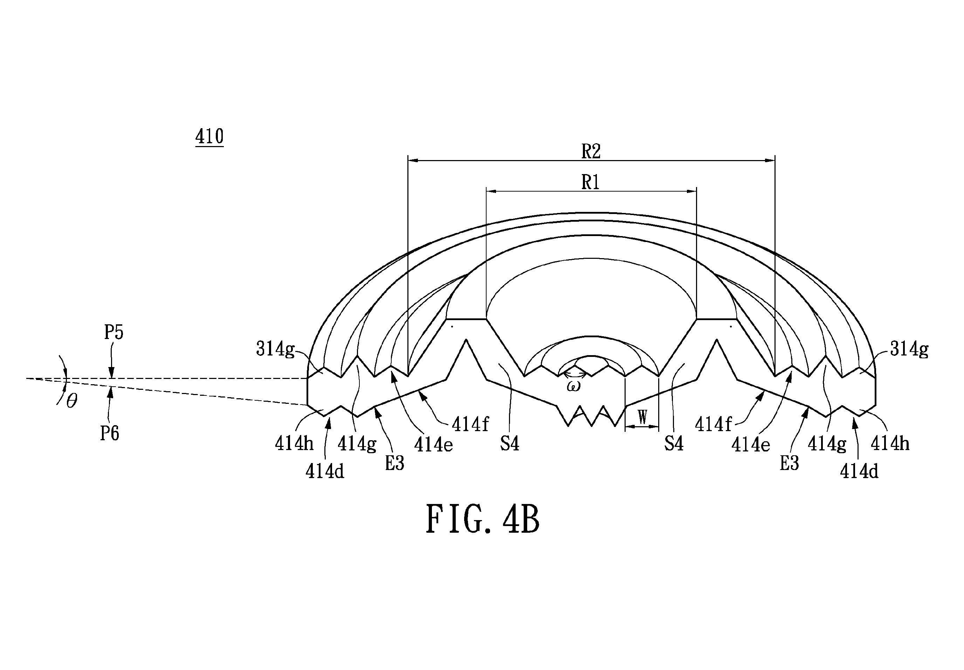

Fig. 4A illustrates a perspective view of a light module in accordance with another embodiment of the instant disclosure. Fig. 4B illustrates a cross-sectional view of a light guide device in Fig. 4A. Please refer to Fig. 4A in conjunction with Fig. 4B. A light module 400 includes a light guide 410 and a light source 420. The light guide 410 includes a rounded light guide plate 414 and a flat-top cone splitter 412. The light source 420 is disposed on top of the light guide 410.

The rounded light guide plate 414 includes a light outlet face 414d, a light guiding face 414e and a reflection face 414f. The light outlet face 414d is disposed opposite to the light guiding face 414e.

The reflection face 414f connects to an edge E3 of the light outlet face 414d and extends from the edge E3 of the light outlet face 414d to a distance with a special angle of elevation. In the instant embodiment, the reflection face 414f is flat (as shown in Fig. 4B) and does not connect to the light guiding face 414e. However, the reflection face 414f can be a curved surface, for example, circular parabolic, elliptic parabolic or hyperbolic parabolic and the shape thereof is not limited thereto. Additionally, the reflection face 414f can be made of a highly reflective material, or the reflection face 414f is formed with a plurality of second microstructures or paints with high reflectivity.

The light guiding face 414e has the plurality of first microstructures 314g and a plurality of third microstructures 414g. The third microstructures 414g and the first microstructures 314g may be spaced prisms, but the third microstructures 414g can be different from the first microstructures 314g in structure. For example, in Fig. 4B the third microstructure 414g is taller than the first microstructure 314g.

In the instant embodiment, the width W of the first microstructure 314g may range between 5 $\mu$m to 500 $\mu$m. In the embodiment shown in Fig. 4B, the width of the third microstructure 414g can be equivalent to the width W.

Furthermore, the light outlet face 414d has a plurality of outlet microstructures 414h. In the instant embodiment, the outlet microstructures 414h are spaced prisms (as shown in Fig. 4B) or semicircle cylinders. The light outlet face 414d may also be flat or matted and the structure thereof is not limited thereto.

Each of the third microstructures 414g is on the same reference plane P5. The intersection of the plane P5 and an extension plane P6 extending from the light outlet face 414d form an angle θ. Each of the prisms (i.e. the third microstructures 414g) has an apex angle ω. For optimizing the light uniform distribution, the angle θ may be less than 10° while the apex angle ω may range between 60° to 120°. The angle θ, the apex angle ω and the refractive index n of the light guide plate 414 satisfy the aforementioned equation (1). The refractive index n may range from 1.5 to 1.58.

The flat-top cone splitter 412 includes an annular light inlet face 416 and a splitting portion S4. The cone splitter 412 projects out of the light guide plate 414. The inner diameter R1 of the splitting portion S4 expands from the bottom to the top (i.e. light inlet face 416) like a funnel. In contrast, the outer diameter R2 shrinks from the bottom to the top (i.e. the light inlet face 416) like an upside down funnel.

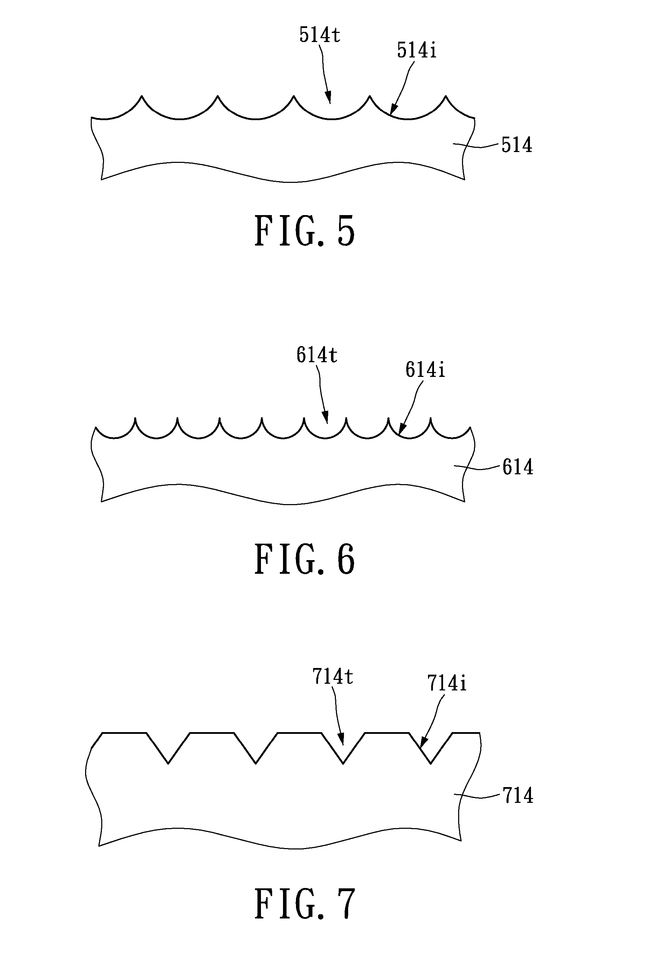

It is worth noted that in the previously mentioned embodiments, shown in Fig. 1A to Fig. 4B, the first microstructures 114g, 314g, the third microstructures 214g, 414g and outlet microstructures 214h, 414h can be modified to trenches, which still serve the same optical function. The trench can be a V-cut, curved trench or polygonal trench. The V-cut can be either symmetrical or unsymmetrical, while the curved trench can be circular parabolic, elliptic parabolic or hyperbolic parabolic as shown in Fig. 5 to Fig. 9.

Fig. 5 to Fig. 9 show schematic cross-sectional view of a variety of microstructures. Any one of the light guide plates 514, 614, 714, 814 and 914 may be one of the light guide plates 114a, 114b, 114c and 214, or one of the rounded light guide plates 314 and 414. Please refer to Fig. 5 where the light guide plate 514 includes a plurality of curved trenches 514t may be formed with elliptic parabolic faces 514i. One of the first microstructures 114g, 314g, the third microstructures 214g, 414g and outlet microstructure 214h can be replaced by the trench 514t.

Please refer to Fig. 6. The light guide plate 614 shown in Fig. 6 includes a plurality of curved trenches 614t may be formed with circular parabolic faces 614i. One of the first microstructures 114g, 314g, the third microstructures 214g, 414g and the outlet microstructure 214h can be replaced by the trench 614t.

Please refer to Fig. 7. The light guide plate 714 shown in Fig. 7 includes a plurality of trenches 714t which are V-cuts. At least one of the first microstructures 114g, 314g, the third microstructures 214g, 414g and outlet microstructure 214h can be replaced by the trench 714t. In addition, the cross-section of the trench 714t can be in the shape of a triangle.

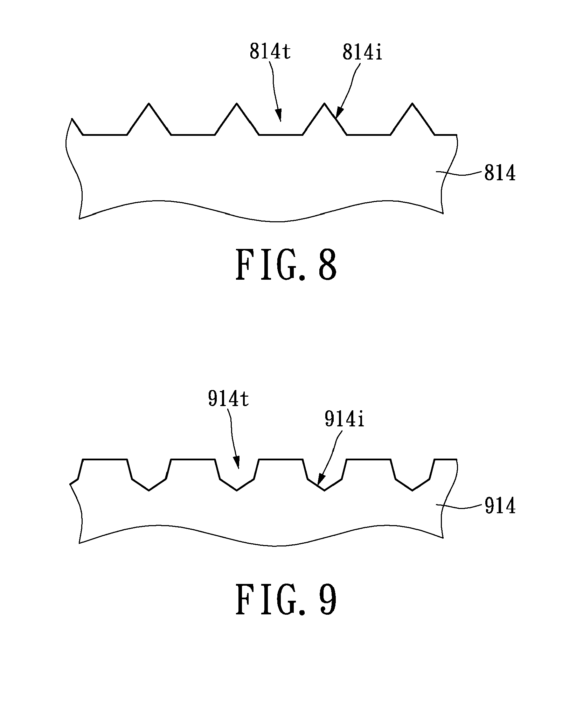

Please refer to Fig. 8. The light guide plate 814 shown in Fig. 8 includes a plurality of trenches 814t which are polygonal trench. The bottom surface of the trench 814t can be a plane. At least one of the first microstructures 114g, 314g, the third microstructures 214g, 414g and outlet microstructure 214h can be replaced by the trench 814t. Additionally, in the embodiment shown in Fig. 8, the cross-section of the trench 814t can be in the shape of a polygon, such as the quadrangle 814i in Fig. 8.

Please refer to Fig. 9. The light guide plate 914 shown in Fig. 9 includes a plurality of polygonal trenches. At least one of the first microstructures 114g, 314g, the third microstructures 214g, 414g and outlet microstructure 214h can be replaced by the trench 914t. In the embodiment shown in Fig. 9, the cross-section of the trench 914t can be in the shape of a polygon, such as the pentagon 914i in Fig. 9.

As previously mentioned the first microstructures 114g, 314g, the third microstructures 214g, 414g and outlet microstructure 214h can be replaced by the trenches 514t, 614t, 714t, 814t and 914t (as shown in Fig. 5 to Fig. 9). Moreover, the light guiding faces 114e, 214e, 314e and 414e may have the plurality of first microstructures 114g, 314g or the plurality of third microstructures 214g, 414g.

Each of the microstructures, such as the microstructures 114g, 214g, 314g or 414g, is a spaced linear bar or an annular bar. The first and third microstructures 114g, 214g are linear bars while the first and third microstructures 314g, 414g are annular bars. The shape of the bar is prismatic. Additionally, the light outlet face 214d, 414d may have the plurality of outlet microstructures 214h, 414h. Each of the outlet microstructures is a spaced linear bar or annular bar. The outlet microstructures 214h are linear bars while the outlet microstructures 414h are annular bars. The shape of the bar is prismatic.

Therefore, the incident light from the light module passes through the light inlet face to the light guide device. Then, the light ray is transmitted to the light guide plate, where the light ray travels to the reflection face, the light guiding face and the light outlet face in sequence. Next, the uniform light ray spreads through the light outlet face. In other words, the light module splits the incident light, and then the light guide plates divert the light. Thus, the light guide device can uniform the light form the light source.

The descriptions illustrated *supra* set forth simply the preferred embodiments of the instant disclosure; however, the characteristics of the instant disclosure are by no means restricted thereto. All changes, alternations, or modifications conveniently considered by those skilled in the art are deemed to be encompassed within the scope of the instant disclosure delineated by the following claims.

**Claims**

1. A light guide device (110) comprising:

    N+1 light guide plates (114a), wherein N is a natural number, each of the light guide plates (114a) comprising:

        a light outlet face (114d);
        a light guiding face (114e) disposed opposite to the light outlet face (114a) and having a plurality of first microstructures (114g) to direct light rays (L1); and
        a reflection face (114f) extending from an edge of the light outlet face (114d) to a distance with a special angle of elevation and is adjacent to the edge; and

    N linear plane splitters (112a) each having a light inlet face (116), a first splitting portion (S1) and a second splitting portion (S2), the first and second splitting portions (S1, S2) extending from the light inlet face (116);
    wherein the first splitting portion (S1) and the second splitting portion (S2) of the i$^{th}$ linear plane splitter (112a) connects to the light guiding face (114e) and the reflection face (114f) of the (j-1)$^{th}$ and i$^{th}$ light guide plates (114a) respectively and project outward away from the plane of the light guide plates (114a), the i and j satisfy $1 \leqq i \leqq N$ and $2 \leqq j \leqq N+1$.

2. A light guide device (310), comprising:

    a rounded light guide plate (314) comprising:

        a light outlet face (314d);
        a light guiding face (314e) disposed opposite to the light outlet face (314d) and having a plurality of first microstructures (314g) to direct light rays (L1); and
        a reflection face (314f) extending from an inner edge of the light outlet face (314d) to a distance with a special angle of elevation and is adjacent to the inner edge; and

    a flat-top cone splitter (312) consisting of a circular or an annular light inlet face (316) and a splitting portion (S3) surrounding the light inlet face (316), wherein the bottom of the splitting portion (S3) connects to the light guiding face (314e) and the reflection face (314f) respectively.

3. The light guide device according to claim 1 or 2, wherein the first microstructures (114g, 314g) are spaced prisms.

4. The light guide device according to claim 3, wherein the prisms are on a reference plane (P1, P3), the intersection of the reference plane (P1, P3) and an extension plane (P2, P4) from the light outlet face (114d, 314d) defines an angle θ, each of the prisms has the apex angle ω, the light guide plate (114a, 314) has a refractive index n, and θ, ω and n satisfy the equation:

$$3 \times \sin^{-1}(1/n) > (\theta + \omega) > 1.5 \times \sin^{-1}(1/n).$$

5. The light guide device according to claim 4, wherein the θ is less than 10°.

6. The light guide device according to claim 4, wherein the ω ranges from 60° to 120°.

7. The light guide device according to claim 1 or 2, wherein the longitudinally cross-sectional view of each of first microstructures (114g, 314g) is a quadric.

8. The light guide device according to claim 7, wherein the refractive index of the light guide plate (114a, 314) ranges from 1.5 to 1.58.

9.  The light guide device according to claim 8, wherein the distance between two neighboring first microstructures (114g, 314g) is less than 0.5 mm.

10. The light guide device according to claim 9, wherein the width of each of the first microstructures (114g, 314g) ranges from 5μm to 500μm.

11. The light guide device according to claim 1 or 2, wherein the reflection face (114f, 314f) is made of a highly reflective material or the reflection face (114f, 314f) is formed with a plurality of second microstructures or paints with high reflectivity.

12. The light guide device according to claim 1 or 2, wherein the light guiding face (214e, 414e) is further formed with a plurality of third microstructures (214g, 414g).

13. The light guide device according to claim 12, wherein the third microstructures (214g, 414g) are spaced prisms.

14. The light guide device according to claim 13, wherein the side cross-sectional view of each of third microstructures (214g, 414g) is a polygon or a quadric.

15. A light module (100), comprising:

a light guide device (110) according to claim 1; and
N light sources disposed on the light inlet faces (116) of the linear plane splitters (112a) respectively, wherein the light ray (L1) from the $i^{th}$ light source received by the $i^{th}$ linear plane splitter (112a) travelling separately through the $(j-1)^{th}$ light guide plate (114a) and $j^{th}$ light guide plate (114a).

16. A light module (310), comprising:

a light guide device (310) according to claim 2; and
at least a light source disposed on the light inlet face (314), wherein the light ray (L1) from the light source received by the cone splitter (312) travelling through the rounded light guide plate (314).

FIG. 1A

FIG. 1B

FIG. 1C

FIG. 1D

200

220

110

212

114g 114g

214

214e

214h 214e 214f 214f 214e 214h

214d 214g 214g 214d

# FIG. 2

300

310

320

312

S3a 316a

314

# FIG. 3A

310

316   S3a   312

P3

θ

P4

314g

314d
314e
314g
E2
314f
S3   S3
314f
E2
314e
D
W
314d

## FIG. 3B

400

420

412
410
414

S4

## FIG. 4A

410

FIG. 4B

EP 2 653 779 A2

514t

514i

514

## FIG. 5

614t

614i

614

## FIG. 6

714t

714i

714

## FIG. 7

814t    814i

814

FIG. 8

914t

914i

914

FIG. 9